# EUROPEAN PATENT APPLICATION

(11) **EP 2 621 216 A1**
(43) Date of publication of application: **31.07.2013**
(21) Application number: 11789149.9
(22) Date of filing: 27.05.2011
(51) Int. Cl.: H04W 36/14

(54) **NETWORK SELECTION METHOD AND TERMINAL EQUIPMENT**

(30) Priority: 20.10.2010 CN 201010513279
(71) Applicant: Huawei Technologies Co., Ltd., Shenzhen, Guangdong 518129 (CN)
(72) Inventor: LI, Jilin, Guangdong 518129 (CN); ZHOU, Guoan, Guangdong 518129 (CN); ZHENG, Xiaochun, Guangdong 518129 (CN); ZHANG, Xiaopeng, Guangdong 518129 (CN)
(74) Representative: Pfenning, Meinig & Partner GbR
(86) International application number: PCT/CN2011/074758
(87) International publication number: WO 2011/150770

(57) **Abstract**

A network selection method and a terminal device are applied to the field of communication technologies. The network selection method is applied to a terminal device based on a subscriber identity module SIM card, and includes: preferentially camping a circuit switched CS domain on a first network and preferentially bearing a CS domain service by the first network; preferentially camping a packet switched PS domain on a second network and preferentially bearing a PS domain service by the second network; when communication quality of the second network fails to meet requirements of the PS domain service, camping the PS domain on the first network and bearing the PS domain service by the first network, where the first network has a lower data transmission rate but in most cases has better communication quality than the second network. With the above method, while high-speed data transmission is pursued, the cases where a call drops and voice quality declines during a call may be prevented, thereby improving the user experience in voice services.

## Description

This application claims priority to Chinese Patent Application No. 201010513279.5, filed with the Chinese Patent Office on October 20, 2010 and entitled "NETWORK SELECTION METHOD AND TERMINAL DEVICE," which is incorporated herein by reference in its entirety.

### FIELD OF THE INVENTION

The present invention relates to the field of communication technologies, and in particular, to a network selection method and terminal device.

### BACKGROUND OF THE INVENTION

With the development of communication technologies, high-speed data transmission communication networks such as 3rd-generation (3rd-generation, 3G) mobile communication, long term evolution (Long Term Evolution, LTE), and wireless local area networks (Wireless Local Area Networks, WLAN) have been more and more widely applied. Such networks are capable of providing high-speed data services; in addition, some of the networks support voice services in a circuit switched (Circuit Switch, CS) domain (such as the 3G technologies). At present, in a mobile communication network, voice services are generally implemented based on CS technologies, where software and hardware related to the implementation of those technologies are collectively referred to as a circuit switched domain (Circuit Switched Domain, CS domain); data services are generally implemented based on packet switched (Packet Switch, PS) technologies, where software and hardware related to those technologies are collectively referred to a packet switched domain (Packet Switch Domain, PS domain).

In the process of developing these high-speed communication networks, some existing networks cannot be upgraded to new high-speed communication networks within a short period of time due to various limitations; as a result, the new high-speed communication networks will coexist with existing networks for a long time. In this long period of coexistence, high-speed communication networks cover limited areas; therefore, the network communication quality fails to meet service requirements in many cases, especially for voice services which are sensitive to the network communication quality. When the network communication quality declines, problems such as bad call quality, disconnection, and poor signal strength may occur, and may greatly affect the user experience. Therefore, how to improve voice service quality during the period is a major problem to be solved in the communication field.

For example, when a 2nd-generation mobile communication technologies (2G) network is upgraded to a 3G network, the above problem is solved as follows by applying the prior art.

For the existing 2G/3G dual-mode terminals, a CS domain and a PS domain both preferentially camp on the 3G network; when quality of the 3G network declines to a specific threshold, the CS domain and the PS domain are both handed over to the 2G network; when the network quality of the 3G network satisfies a specific threshold, the CS domain and the PS domain are both handed over back to 3G. Because 2G is a mature network and voice signal coverage thereof is better than that of 3G, a problem of bad voice service quality or no signal in the 3G network may be solved to some extent when the CS domain and the PS domain are handed over from 3G to 2G.

During the implementation of the present invention, the inventors find that the prior art has at least the following problem.

In the process of 2G and 3G network selection, because the CS domain and PS are handed over simultaneously, a terminal cannot make calls; meanwhile, the handover between 2G and 3G during a call is likely to cause the call to drop and the voice quality to decline, which affects the user experience in the voice service.

### SUMMARY OF THE INVENTION

Embodiments of the present invention provide a network selection method and terminal device, to improve the user experience in voice services while pursuing high-speed data transmission.

The network selection method is applied to a terminal device based on a subscriber identity module SIM card, where the SIM card is configured to store information about a user related to a first network and a second network, and the first network has a lower data transmission rate than the second network but in most cases has better communication quality; the method includes the following steps:
preferentially camping a circuit switched CS domain on the first network and preferentially bearing a CS domain service by the first network;
preferentially camping a packet switched PS domain on the second network and preferentially bearing a PS domain service by the second network; and
when communication quality of the second network fails to meet requirements of the PS domain service, camping the PS domain on the first network and bearing the PS domain service by the first network.

The terminal device includes:
a subscriber identity module SIM card, where the SIM card is configured to store information about a user related to a first network and a second network, and the first network has a lower data transmission rate than the second network but in most cases has better communication quality;
a first network processing module configured to preferentially camp a CS domain on the first network and bear a CS domain service by the first network;
a second network processing module configured to preferentially camp a PS domain on the second network and bear a PS domain service by the second network; and
an adapting module configured to camp the PS domain on the first network and bear the PS domain service by the first network, when communication quality of the second network fails to meet requirements of the PS domain service.

The above technical solutions have the following advantages.

In embodiments of the present invention, by preferentially camping a CS domain on a first network and preferentially bearing a CS domain service by the first network, and preferentially camping a packet switched domain (PS domain) on a second network and preferentially bearing a PS domain service by the second network, a high-speed data transmission feature of the second network can be used to implement the PS domain service (data service), and a high-quality communication feature of the first network can be used to implement voice services, so that during a process of using services by a user, no re-selection and handover between 2G and 3G are required for voice services in normal cases, and the cases in which calls cannot be made during a re-selection process and the cases in which a call drops and voice quality declines during handover in a call process will not occur, thereby improving the user experience in voice services.

### BRIEF DESCRIPTION OF THE DRAWINGS

In order to illustrate the technical solutions in embodiments of the present invention more clearly, accompanying drawings needed in the embodiments or the prior art are illustrated briefly below. It is evident that the accompanying drawings are only some embodiments of the present invention, and persons of ordinary skill in the art may obtain other drawings according to the accompanying drawings without creative efforts.

FIG. 1 is a flowchart of a method according to Embodiment 1 of the present invention;

FIG. 2 is a structural diagram of a terminal device according to Embodiment 2 of the present invention;

FIG. 3 is a schematic diagram of a general solution of a terminal device according to Embodiment 3 of the present invention;

FIG. 4 is a schematic structural diagram of a terminal device according to Embodiment 3 of the present invention;

FIG. 5 is another schematic structural diagram of a terminal device according to Embodiment 3 of the present invention;

FIG. 6 is another schematic structural diagram of a terminal device according to Embodiment 3 of the present invention;

FIG. 7 is a schematic structural diagram of a terminal device according to Embodiment 4 of the present invention;

FIG. 8 is a schematic structural diagram of a terminal device according to Embodiment 5 of the present invention; and

FIG. 9 is another schematic structural diagram of a terminal device according to Embodiment 5 of the present invention.

### DETAILED DESCRIPTION OF THE EMBODIMENTS

To make the objectives, technical solutions, and advantages of the present invention clearer, the following describes the present invention in detail with reference to specific embodiments and relevant accompanying drawings.

### Embodiment 1

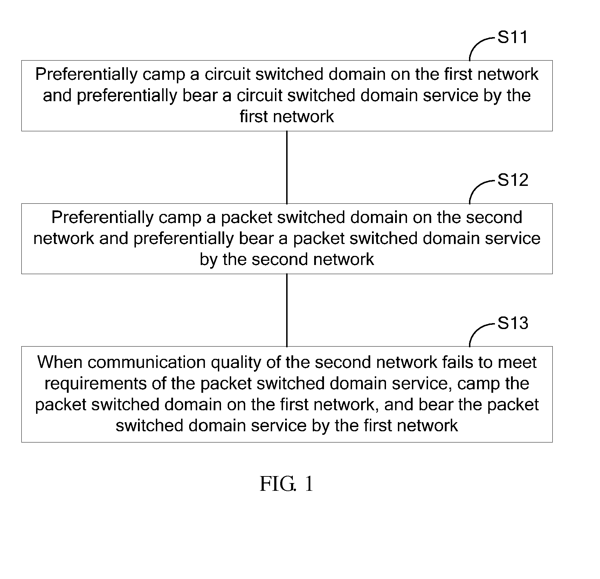

Embodiment 1 of the present invention provides a network selection method which is applied to a terminal device based on a subscriber identity module (Subscriber Identity Module, SIM) card, where the SIM card is configured to store information about a user related to a first network and a second network, and the first network has a lower data transmission rate than the second network but in most cases has better communication quality. As shown in FIG. 1, the method includes the following steps:
S11. preferentially camp a circuit switched CS domain on the first network and preferentially bear a CS domain service by the first network;
S12. preferentially camp a packet switched PS domain on the second network and preferentially bear a PS domain service by the second network; and
S13. when communication quality of the second network fails to meet requirements of the PS domain service, camp the packet switched PS domain on the first network, and bear the PS domain service by the first network.

The embodiment of the present invention may be executed by a terminal device. The terminal device contains only one SIM card, where the SIM card is a SIM card in a broad sense. That is, a common SIM card which has communication-related functions, such as storing user-related information, performing authentication and encryption, may be deemed to be a SIM card in the embodiment of the present invention. For example, the SIM card may be a SIM card in a 2G network, or a universal subscriber identity module (Universal Subscriber Identity Module, USIM) card in a 3G or an LTE network. In this embodiment of the present invention and following embodiments, for the convenience of description, a SIM card and a USIM card are not specifically differentiated. Persons skilled in the art may select a specific SIM form for a corresponding network according to actual situations (for example, in the 3G or LTE network, a USIM card is preferred).

Specifically, the terminal devices are mobile phones or data cards. However, the embodiment of the present invention does not exclude another terminal device (such as a tablet computer which can support a calling function by using a SIM card) in which a SIM card can be inserted to perform the functions of voice calls and data transmission over different networks. In the embodiment of the present invention, one SIM card supports operations in two types of networks simultaneously; therefore, this technology may be deemed to be a "single-card dual standby" technology which is different from existing dual-card dual standby and single-card single standby technologies.

The CS domain refers to a software and hardware combination which is formed by terminals and networks and which is capable of performing circuit switched services. Some CS domain related services, such as voice calls and short message transmission, may be performed by using the CS domain. The PS domain refers to a software and hardware combination which is formed by terminals and networks and which is capable of performing packet switched services. Some PS domain related services, for example, data services such as high-speed Internet and mobile television, may be performed by using the PS domain.

In the embodiment of the present invention, camping the CS domain on the first network, or camping the PS domain on the second network means that the CS domain (or PS domain) implements services thereof based on the first network (or the second network). For example, the CS domain implements a CS domain service (voice, short message, and the like) through the first network (2G), and the PS domain implements a PS domain service (Internet access, and the like) through the second network (3G). By camping the CS domain (or the PS domain) on the first (or the second) network, the first (or the second) network may be used to bear (execute) the CS domain (or the PS domain) service.

In the embodiment of the present invention, specific forms of the first network and the second network are not limited. Meanwhile, communication quality and data transmission rates of the first network and the second network are relative. Therefore, the specific forms of the first network and the second network are also relative. For example, the first network may be a 2G network. When the first network is a 2G network, the second network may be a 3G network, a WLAN, an LTE, a worldwide interoperability for microwave access (Worldwide Interoperability for Microwave Access, WiMAX) network, or the like. A 2G network has been applied for a long time on a large scale; as a result, the 2G network covers a large area and communication quality is high; however, compared with a network such as a 3G network, the data transmission rate of a 2G network is lower.

Alternatively, the first network may be a 3G network. When the first network is a 3G network, the second network may be a WLAN, an LTE, a WiMAX, or the like. That is, when a 3G network is applied on a large scale and a 4th-generation communication network (LTE) needs to be deployed, as compared with LTE, the 3G network has been applied for a longer time and covers a larger area; therefore, communication quality of the 3G network is better than that of an LTE network, but the data transmission thereof is slower than that of the LTE. Certainly, the first network may also be a 2G network, while the second network may be a WLAN, an LTE, a WiMAX, or the like.

It should be noted that the first network and the second network in the embodiment of the present invention do not mean that they process only services of "one" first network and services of "one" second network, and it should be understood that the number of specific network types that are supported is not limited. For example, multiple networks including 2G, 3G, and LTE may be supported. In this case, 2G or 3G may be selected as a first network, and 3G (available when the first network is 2G) or LTE (available when the first network is 2G or 3G) may be selected as the second network.

In the embodiment of the present invention, both networks may access the SIM card; therefore, relevant accessing shall be processed, for example, accessing the SIM card sequentially in the order of requests, so that accessing services do not conflict. Meanwhile, when the SIM card fails to store specific parameter information, a third-party storage is used to store the parameter information. For example, for a location area identity, the SIM card is capable of storing a location area identity of only one network; for another location area identity, a third-party storage (such as a memory or flash) is used to store the specific parameter information.

In the embodiment of the present invention, two networks and two services are involved, and a resource access conflict may occur (for example, accessing simultaneously); therefore, the PS domain service and the CS domain service need to be processed, so that no service conflict occur. For example, a resource which needs to be accessed simultaneously may be accessed in a round robin or notification manner.

Evidently, in the embodiment of the present invention, by preferentially camping a CS domain on a first network and preferentially bearing a CS domain service by the first network, and preferentially camping a packet switched domain (PS domain) on a second network and preferentially bearing a PS domain service by the second network, a high-speed data transmission feature of the second network is used to implement the PS domain service (data service), and a high-quality communication feature of the first network is used to implement voice services, so that during a process of using services by a user, no re-selection and handover between 2G and 3G are required for voice services in normal cases, and the cases in which calls cannot be made during a re-selection process and the cases in which a call drops and voice quality declines during handover in a call process will not occur, thereby improving the user experience in voice services.

Further, in the embodiment of the present invention:

When communication quality of the first network fails to meet requirements of the CS domain service and when the second network is capable of bearing the CS domain service, the CS domain is camped on the second network and the second network bears the CS domain service. This solution is an optional solution. If the second network has the capability to bear the CS domain service (such as a 3G network), the preceding step may be implemented; when the communication quality of the first network fails to meet requirements of the CS domain service, the CS domain is handed over and is camped on the second network. If the second network does not have the capability to bear the CS domain service (such as WLAN, LTE, or WiMAX), the preceding step may be not implemented, or a packet domain of the second network bears the circuit domain service (which is generally referred to as VoIP).

The network communication quality may be assessed with reference to various parameters according to actual situations. For example, whether network quality meets service requirements may be determined with reference to whether signal strength of a network meets a specific threshold. If the signal strength is lower than the specific threshold, it can be regarded that the network communication quality fails to meet the service requirements and network handover is required. In addition, the network communication quality may also be assessed with reference to user quantities, loads and so on (if transmit power of a terminal exceeds a specific threshold, it indicates that the network communication quality declines). Different criteria for assessing the network communication quality may be set depending on different networks and different services. For example, a judgment criterion is used for handing over the PS domain from the second network to the first network, another judgment criterion is used for handing over the PS domain from the first network to the second network, and other judgment criteria are used for handing over the CS domain between the first network and the second network.

In addition, in the embodiment of the present invention, when the network communication quality recovers, a relevant service may be handed over back to an original network. For example, the PS domain may be handed over back from the first network to the second network and the second network bears the PS domain service.

It may be understood that the preferentially camping the CS domain on the first network and the preferentially camping the PS domain on the second network are implemented under the condition that the communication quality of their respective networks meets service requirements. In actual applications, if communication quality of a network fails to meet service requirements, whether communication quality of another network meets the service requirements is judged first; if yes, handover is performed; otherwise, no handover is performed.

By applying the above method, when communication quality of a network fails to meet relevant service requirements, a relevant service may be processed by another network, thereby continuing service execution.

### Embodiment 2

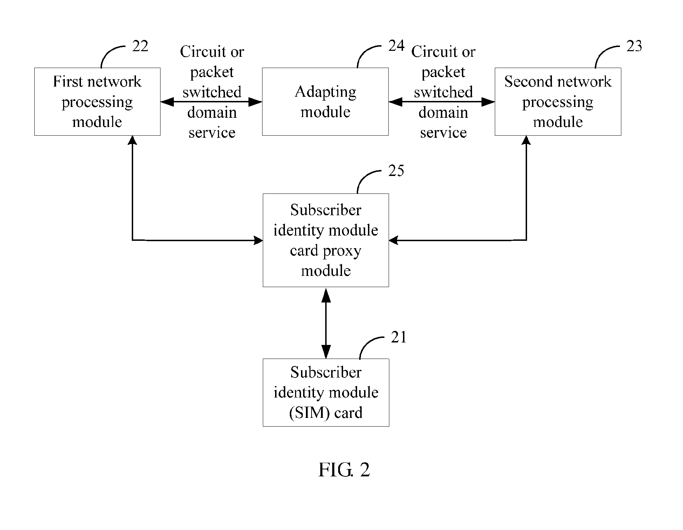

Based on Embodiment 1, the embodiment of the present invention provides a terminal device. As shown in FIG. 2, the terminal device according to the embodiment of the present invention includes: a subscriber identity module (SIM) card 21, where the SIM card 21 is configured to store information about a user related to a first network and a second network, and the first network has a lower data transmission rate than the second network but in most cases has better communication quality; for specific description of the first network and the second network, reference may be made to relevant description in Embodiment 1 and no repeated description is provided herein;
a first network processing module 22 configured to preferentially camp a CS domain on the first network and preferentially bear a CS domain service by the first network;
a second network processing module 23 configured to preferentially camp a PS domain on the second network and preferentially bear a PS domain service by the second network; and
an adapting module 24 configured to camp the PS domain on the first network and bear the PS domain service by the first network, when communication quality of the second network fails to meet requirements of the PS domain service.

The adapting module 24 is further configured to: when communication quality of the first network fails to meet requirements of the CS domain service and when the second network is capable of bearing the CS domain service, camp the CS domain on the second network, and bear the CS domain service by the second network;
receive a service request from an application program, and forward the service request to the first network processing module 22 or the second network processing module 23 according to a service type; and receive a service request reported by the first network processing module 22 or the second network processing module 23, and forward the service request to the application program; and
process the PS domain service and the CS domain service, so that no service conflict occurs.

The terminal device according to the embodiment of the present invention further includes a SIM card proxy module 25 configured to process services of accessing the SIM card 21, so that the accessing services do not conflict; or
when the SIM card 21 fails to store specific parameter information, store the specific parameter information by using a third-party storage.

When the first network is used to bear (process and execute) the CS domain service, the first network processing module 22 performs relevant service processing functions; when the second network is used to bear the PS domain service, the second network processing module 23 performs corresponding service processing functions. The first network processing module 22 and the second network processing module 23 are connected to the SIM card 21, to perform communication procedures, such as authentication, registration, CS services, and PS services.

It should be noted that the above units are modules obtained through functional division, and no strict limit is set between them. For example, for the adapting module 24, all or some functions thereof may be performed by the first network processing module 22 or the second network processing module 23 or another module. Meanwhile, specific implementation of these modules is not limited in the embodiment of the present invention. Generally, the modules may be implemented by relevant devices such as hardware chips (such as a CPU and DSP) and by running corresponding software. The modules may be implemented by the same chip or each module may be implemented by a different chip, and the embodiment of the present invention sets no limit thereto.

The first network and the second network have different specific forms. The following embodiments give specific description for each case. In the following embodiments, for a 2G, 3G, or LTE network, a first (second) network processing module may include a protocol stack processing module, a physical layer processing module, a radio frequency processing module, and an antenna, where the protocol stack processing module is configured to process relevant protocols (which mainly are protocols above a physical layer), the physical layer processing module is configured to process physical layer protocols, the radio frequency processing module is configured to perform radio frequency processing, and the antenna is configured to send and receive signals. The modules may process services of only a certain network or simultaneously process services of multiple networks. In the embodiment of the present invention, a prefix of a name of a module indicates a type of a network which can be processed by the module. If a module is capable of processing multiple networks, "/" in the prefix indicates that it can process services of multiple networks. For example, a 2G protocol stack processing module can process 2G protocols, and a 2G/3G protocol stack module can process not only 2G protocols but also 3G protocols.

In the following embodiments, for a WLAN or a WiMAX network, the first network processing module may include a WLAN module and a WLAN antenna, or a WiMAX module and a WiMAX antenna.

### Embodiment 3

Based on the above embodiments, the embodiment of the present invention describes the solution in detail by using a 2G network as a first network and a 3G network as a second network.

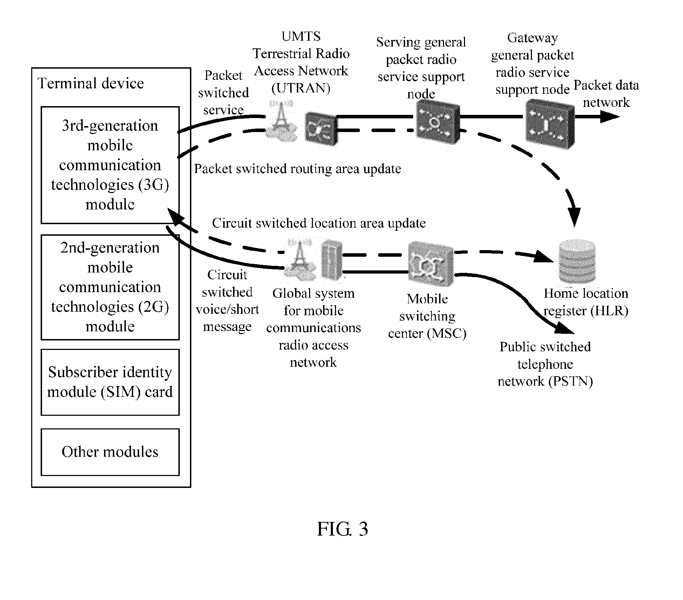

FIG. 3 is a schematic diagram of the embodiment of the present invention. FIG. 3 shows a terminal device (such as a mobile phone) on the left. The terminal includes a 3G module, a 2G module, a SIM card (or a USIM card, which may be adjusted depending on actual situations), and another relevant module. The 2G module is preferentially configured to implement a CS domain related service, and the 3G module is preferentially configured to implement a PS domain related service. When the 2G or 3G module implements a relevant service, interaction with some network elements is required, such as interacting with a UMTS terrestrial radio access network (UTMS Terrestrial Radio Access Network, UTRAN), a serving GPRS support node (Serving GPRS Support Node, SGSN) or gateway GPRS support node (GGSN), and a home location register (Home Location Register, HLR) to perform a routing area update procedure in the PS domain, and interacting with a global system for mobile communications (GSM) or enhanced data rate for GSM evolution (EDGE) radio access network (GERAN), a mobile switching center (Mobile Switching Center, MSC), and an HLR to perform a location area update procedure in the CS domain. Existing network elements may be used for such network elements.

Specifically, in the embodiment of the present invention, the terminal uses the 2G module to initiate a CS domain location area update procedure to preferentially camp the CS domain on the 2G network, and the 2G network bears calling related and called related services of subsequent voice and short message services. A standard procedure is used for the location area update procedure and will not be described herein.

For the PS domain, the terminal of the embodiment of the present invention uses the 3G module to initiate a PS domain routing area update procedure to preferentially camp the PS domain on the 3G network, and take full advantage of high-speed data services provided by the 3G network to implement data communication. A standard procedure is also used for the PS domain routing area update procedure and will not be described herein.

The CS domain location area update procedure and the PS domain routing area update procedure may be implemented simultaneously during initialization, and methods defined in 2G or 3G network standards may be used. When it is detected that communication quality of a network fails to meet service requirements, whether to hand over a service to another network is determined according to requirements.

It may be understood that the preferentially camping the CS domain on the 2G network and preferentially camping the PS domain on the 3G network are implemented under the condition that the communication quality of their respective networks meets service requirements. If the quality of a network fails to meet the service requirements, whether to perform handover from one network to another network may be determined according to service operation requirements. For example, the CS domain may be handed over from the 2G network to the 3G network, or the PS domain may be handed over from the 3G network to the 2G network. In actual applications, the communication quality of the 2G network is generally better than that of the 3G network; therefore, it is less possible and necessary to handed over the CS domain from the 2G network to the 3G network. However, the 2G network may become unavailable due to some faults, or signal strength of the 2G network in an area may fail to meet service requirements while the 3G network does, and then the CS domain may be handed over from the 2G network to the 3G network. In another aspect, because the network quality of the 3G network is worse than that of the 2G network, network quality problems more likely happen in the 3G network; and thus it is more possible and necessary to hand over the PS domain from the 3G network to the 2G network.

Different criteria for assessing the network communication quality may be set depending on different networks and different services. For example, a judgment criterion is used for handing over the PS domain from the second network to the first network, another judgment criterion is used for handing over the PS domain from the first network to the second network, and other judgment criteria are used for handing over the CS domain between the first network and the second network.

In the embodiment of the present invention, because the 2G module and the 3G module of a terminal use the same SIM card to access the 2G network and the 3G network, a conflict may occur due to accessing the SIM card simultaneously when 2G or 3G related services are processed. Therefore, the conflict needs to be solved by using a method of changing a storage address of data to be accessed.

For example, the SIM card stores a "location area identity" and a "routing area number" of a network, and a complete routing area identity is formed by a "location area identity" and a "routing area number." When the CS domain and the PS domain of the terminal access the 2G and 3G networks simultaneously, a 2G location area identity is generally different from a 3G location area identity (they may also be configured to be the same by networks), in this case, there may be two different location area identities; however, the SIM card is capable of storing only one location area identity; therefore, another location area identity needs to be specially processed. The special processing specifically includes:
determining which network's location area identity and routing area number are to be stored in the SIM card, for example, it is assumed that the location area identity and the routing area number of the 2G network are stored in the SIM card; and
after the location area update of the 2G network is completed, writing, by the terminal, the location area identity of the 2G network into the SIM card; and after the routing area update of the 3G network is completed, storing, by the terminal, the complete routing area identity directly in a dynamic memory or a fixed storage of the terminal instead of writing the location area identity and the routing area number into the SIM card. When a routing area changes later, the routing area identity stored in the dynamic memory or the fixed storage of the terminal is directly used instead of using the routing area identity stored in the SIM card, and the routing area identity stored in the SIM card is also not used upon power-on.

In the embodiment of the present invention, by preferentially camping the CS domain on the 2G network, the high-quality communication feature of the 2G network may be used for voice services, and little or no network handover is required, thereby ensuring quality of voice services; meanwhile, by preferentially camping the PS domain on the 3G network, the high-speed data transmission communication network of the 3G network may be preferentially used to improve quality of data services. Alternatively, according to service operation requirements, when communication quality of a network fails to meet service requirements, a service may be handed over to another network, so that the corresponding service may be maintained. For example, when the communication quality of the 3G network fails to meet data service requirements, the PS domain may be handed over from the 3G network to the 2G network.

With the embodiment of the present invention, the above methods are implemented, multiple methods may be used to design hardware of a terminal device, and different methods are used to implement the above processing procedures according to different hardware structures. The following describes the embodiment of the present invention based on different module designs.

(1) 2G/3G protocol stack processing module + 3G radio frequency processing module + 2G protocol stack processing module + 2G radio frequency processing module

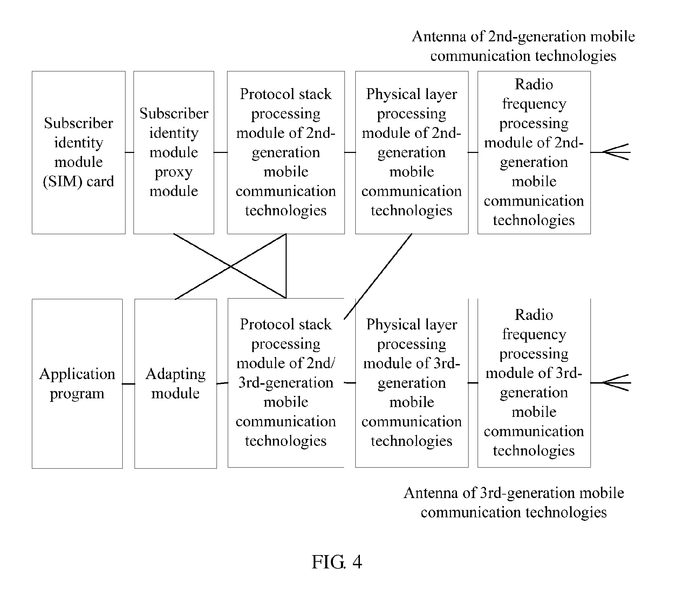

FIG. 4 is a schematic diagram of this solution. In this technical solution, there are two protocol stack processing modules, namely, a 2G/3G protocol stack processing module and a 2G protocol stack processing module. The protocol stack processing modules are configured to process 2G or 3G related communication protocols, where the 2G/3G protocol stack processing module is capable of processing both 2G protocols and 3G protocols, and the 2G protocol stack processing module processes only 2G protocols.

In specific implementation, protocol stack processing units may be deemed as specific programs running on a processing chip, where the programs are used to process 2G or 2G/3G communication protocols. Generally, these protocols are protocols above physical layer protocols. Certainly, the embodiment of the present invention does not preclude the protocol stack processing units from processing some protocols at the physical layer. Persons skilled in the art may perform flexible processing according to actual situations. In this technical solution, the 2G/3G protocol stack processing module is capable of processing 2G or 3G related communication protocols; however, it can process only one of them at the same time. Meanwhile, the 2G/3G protocol stack processing module uses a standard defined procedure for handover during network handover.

As shown in FIG. 4, the embodiment of the present invention further includes a 2G physical layer processing module and a 2G radio frequency processing module, where the 2G physical layer processing module is connected to the 2G protocol stack processing module, the 2G/3G protocol stack processing module, and the 2G radio frequency processing module, and is configured to process 2G physical layer protocols; the 2G radio frequency processing module is configured to modulate or demodulate signals and then receive or send signals via a 2G antenna. The 2G physical layer processing module may receive and process signals from the 2G radio frequency processing module, and may send processed signals to the 2G radio frequency processing module.

As shown in FIG. 4, the embodiment of the present invention further includes a 3G physical layer processing module and a 3G radio frequency processing module, where the 3G physical layer processing module is connected to the 2G/3G protocol stack processing module and the 3G radio frequency processing module, and is configured to process 3G physical layer protocols; the 3G radio frequency processing module is configured to modulate or demodulate signals and then receive or send signals by using a 3G antenna. The 3G physical layer processing module may receive and process signals from the 2G/3G protocol stack processing module, and may send the processed signals to the 3G radio frequency processing module.

The 2G physical layer processing module or the 3G physical layer processing module interacts with each protocol stack processing module in a bidirectional manner, and is capable of receiving data from a relevant protocol stack processing module and is capable of sending data to the relevant protocol stack. In the embodiment of the present invention, functions of the protocol stack processing modules and the physical layer processing modules are not strictly distinguished, and persons skilled in the art may flexibly adjust the functions according to actual situations.

Based on the above design of the functional modules, the network selection method implemented in the embodiment of the present invention is as follows:
the 2G protocol stack processing module preferentially camps the CS domain on the 2G network, and implements a CS domain service (such as a voice service) by using the 2G physical layer processing module, the 2G radio frequency processing module, and the 2G antenna; and
the 2G/3G protocol stack processing module preferentially camps the PS domain on the 3G network, and implements a PS domain service (such as a data service) by using the 3G physical layer processing module, the 3G radio frequency processing module, and the 3G antenna.

Because communication quality of the 2G network is generally better than that of the 3G network and the voice service is sensitive to the communication quality of a network, by preferentially camping the voice service on the 2G network, the quality of the voice service may be guaranteed; and by preferentially camping the data service on the 3G network, the quality of the data service may be guaranteed.

When the 2G protocol stack processing module detects that the communication quality of the 2G network fails to meet requirements of the CS domain service (for example, signals deteriorate due to insufficient coverage or faults of the network), the 2G/3G protocol stack processing module may implement the CS domain service by using the 3G network; in this case, the 2G/3G protocol stack processing module cooperates with the 3G physical layer processing module, the 3G radio frequency processing module, the 3G antenna and the like to perform CS domain and PS domain service procedures simultaneously.

When the 2G/3G protocol stack processing module detects that communication quality of the 3G network fails to meet requirements of the PS domain service, the 2G/3G protocol stack processing module may cooperate with the 2G physical layer processing module, the 2G radio frequency processing module, and the 2G antenna to implement the PS domain service procedure in the 2G network.

Subsequently, if the communication quality of a network recovers, the corresponding service is handed over back to the original network and processed.

When the 2G/3G protocol stack processing module implements the PS domain service procedure in the 2G network, it needs to cooperate with modules, such as the 2G physical layer processing module, the 2G radio frequency processing module, and the 2G antenna, to implement the PS domain service procedure in the 2G network, and at this time, the 2G protocol stack processing module may also need to cooperate with the 2G physical layer processing module, the 2G radio frequency processing module, and the 2G antenna to implement the CS domain service procedure in the 2G network, so a conflict may occur. In this case, the following method may be used to solve the conflict:
(1) setting a service state flag bit for identifying whether the 2G physical layer processing module is implementing a CS procedure or is implementing a PS procedure, where only one procedure is allowed at one time and the CS procedure may be set with a higher priority; the 2G protocol stack processing module and the 2G/3G protocol stack processing module may directly communicate with each other to perform a coordination procedure in which the CS procedure and the PS procedure are concurrently performed, or an adapting module or another upper-layer module may perform coordination to ensure that the CS procedure does not conflict with the PS procedure and guarantee that the CS procedure is preferential;
(2) setting the service state flag bit to a first flag (such as CS) when the 2G protocol stack processing module is accessing the 2G physical layer processing module, and setting the state to idle after the accessing; setting the service state flag bit to a second flag (such as PS) when the 2G/3G protocol stack processing module is accessing the 2G physical layer processing module, and setting the state to idle after the accessing;
(3) before the 2G protocol stack processing module accesses the 2G physical layer processing module, the 2G protocol stack processing module checks the service state flag bit, and proceeds to the CS procedure if the state is idle; if the PS procedure is being performed, instructs the 2G/3G protocol stack processing module to temporarily suspend the accessing of the PS service, and proceeds to the CS procedure after the 2G/3G protocol stack processing module completes a suspension procedure; and after the CS service is completed, instructs the 2G/3G protocol stack processing module to proceeds to the PS procedure; and
(4) before the 2G/3G protocol stack processing module accesses the 2G physical layer processing module, the 2G/3G protocol stack processing module checks the service state flag bit, and proceeds to the PS procedure if the state is idle; if the CS procedure is being performed, temporarily suspends a PS service access request, and after the CS service is completed, proceeds to access the 2G physical layer processing module to implement the PS service procedure.

As shown in FIG. 4, in the embodiment of the present invention, the adapting module is further configured to receive a service request from an application program, distribute the service request to the 2G protocol stack module or the 2G/3G protocol stack processing module. Specifically, for the CS domain service, if the CS domain is camped on the 2G network, the adapting module distributes a CS domain service request to the 2G protocol stack processing module; if the CS domain is camped on the 3G network, distributes a CS domain service request to the 2G/3G protocol stack processing module, where the adapting module may determine, through active query or by receiving a notification, whether the CS domain is camped on a relevant network. For example, the adapting module queries a flag bit set for a protocol stack processing module according to a specific principle, or a change message is notified to the adapting module after a network change occurs on a protocol stack. For the PS domain service, the adapting module distributes a request to the 2G/3G protocol stack processing module. Meanwhile, the adapting module is also configured to forward, to the application program, a service request reported by the 2G protocol stack processing module and the 2G/3G protocol stack processing module.

As shown in FIG. 4, in the embodiment of the present invention, when the 2G protocol stack processing module and the 2G/3G protocol stack processing module implement relevant service procedures and need to access a SIM card of a terminal device, a SIM proxy module is configured to process the accessing of the two protocol stack modules, so that they sequentially access the SIM card in the order of requests, thereby avoiding a conflict which may be caused due to concurrent accessing.

The above modules in the embodiment of the present invention are functionally defined logical modules which may be understood as several independent software modules. In actual applications, the modules are not strictly distinguished. For example, functions of an adapting module may also be implemented by protocol stack modules, and some functions of protocol stack modules may also be implemented by physical layer processing modules.

When the modules are implemented by using hardware, multiple processing chips each may implement functions of a module, or one chip may be used to implement functions of multiple modules. In actual applications, in consideration of factors such as the cost, performance, and technology, generally one chip is used to implement the functions of multiple modules, and the type of the chip may be a CPU, a DSP, an FPGA, or a chip with similar functions.

In the embodiment of the present invention, when the 2G/3G protocol stack processing module hands over a service from the 3G network to the 2G network or hands over it back to the 3G network, a standard 2G/3G interoperability procedure may be used, which does not directly affect the existing 2G and 3G networks; therefore, the experience of the PS service is better that of an existing standard dual-mode terminal, and the data service interruption time during network handover is shorter; however, because the 2G protocol stack processing module and the 2G/3G protocol stack processing module may both use the 2G physical layer processing module and the 2G radio frequency processing module, the problem of a conflict thereof needs to be solved, and the procedure may be comparatively complicated.

(2) 3G protocol stack processing module + 3G radio frequency processing unit+ 2G protocol stack processing module + 2G protocol stack processing unit

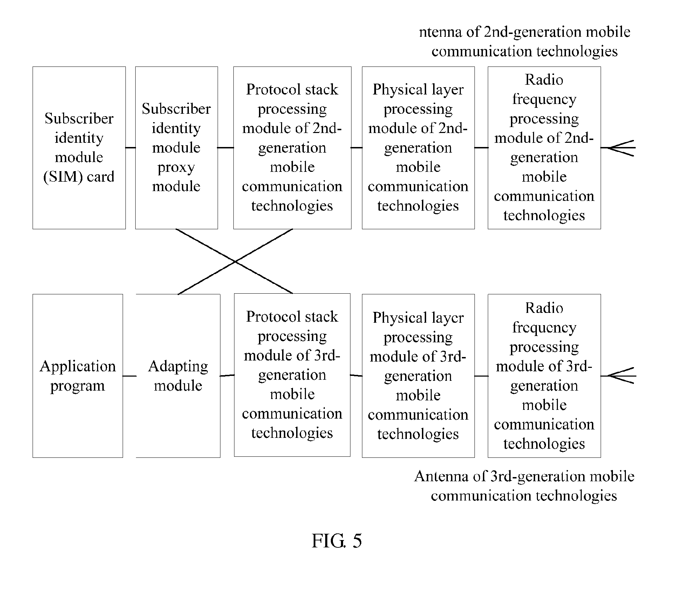

Because in the above solution, complicated conflict coordination between the 2G/3G protocol stack processing unit working in a 2G mode and the 2G protocol stack processing unit may be required, FIG. 5 shows another simplified technical solution.

The 2G/3G protocol stack processing unit in the above solution is changed to a 3G protocol stack processing unit, and a 2G protocol stack processing unit and a 3G protocol stack processing unit run simultaneously and independently. In this solution, the 2G protocol stack processing unit is capable of implementing the CS domain procedure and the PS domain procedure simultaneously, and the 3G protocol stack processing unit is also capable of processing the CS domain service procedure and PS domain service procedure in the 3G network.

The CS domain is preferentially camped on 2G, and an adapting module forwards a CS domain service request such as a voice and short message to the 2G protocol stack processing unit; when communication quality of the 2G network fails to meet requirements of the CS domain service while the communication quality of the 3G network does, the 3G protocol stack processing module may be used to hand over the CS domain service to the 3G network. Then, the adapting module forwards the CS domain service request such as the voice and short message to the 3G protocol stack processing module. When 2G signals recover, the CS domain can be camped on 2G again.

The PS domain is preferentially camped on 3G, and the adapting module forwards a PS service request to the 3G protocol stack processing module; when the communication quality of the 3G network fails to meet requirements of the PS domain service while the communication quality of the 2G network does, the 2G protocol stack processing module may be used to hand over the PS domain service to the 2G network, and the adapting module forwards the PS service request to the 2G protocol stack processing module. When the 3G network quality recovers and meets service requirements, the PS domain is camped on 3G again.

In this solution, for functions of other processing units, reference may be made to the relevant description in embodiment (1) and no repeated description is provided herein.

In this solution, two protocol stack modules run independently, and the case in solution (1) where two protocol stack modules need to access the 2G physical layer processing module simultaneously will not occur; therefore, no conflict processing is required, so that the solution can be implemented easily.

(3) 2G protocol stack processing unit + 2G physical layer processing unit + 2G radio frequency processing unit + 2G/3G protocol stack processing unit + 2G/3G physical layer processing unit + 2G/3G radio frequency processing unit

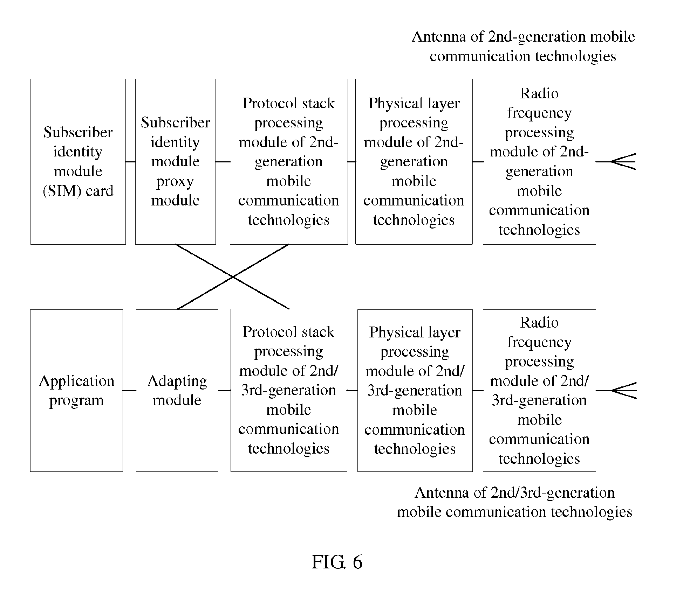

As shown in FIG. 6, this solution adds a complete set of 2G modules to an existing standard dual-mode terminal. The 2G/3G protocol stack processing module, the 2G/3G physical layer processing module, the 2G/3G radio frequency processing module, and the 2G/3G antenna may be deemed as main processing modules of an existing standard terminal, where "2G/3G" indicates that the modules are capable of processing not only 2G network services but also 3G network services, and the operation manner thereof is determined according to a standard protocol definition.

As shown in FIG. 6, a 2G protocol stack processing module, a 2G physical layer processing module, a 2G radio frequency processing module, and a 2G antenna may be deemed as a newly added set of 2G modules; in addition, to solve some potential problems which may occur when the newly added 2G modules and original modules access other modules concurrently, a SIM proxy module and an adapting module are correspondingly added. For specific processing procedures, reference may be made to the description in solution (1) and no repeated description is provided herein.

In this solution, the 2G protocol stack processing module only processes the CS domain service; the 2G/3G protocol stack processing module preferentially implements the PS domain service in the 3G network; when communication quality of the 3G network fails to meet service requirements and handover is required, the 2G/3G protocol stack processing module cooperates with the 2G/3G physical layer processing module, the 2G/3G radio frequency processing module, and the 2G/3G antenna (which all run in a 2G mode) to implement the PS domain service in the 2G network, where a standard procedure is used for handover. In this solution, the 2G/3G protocol stack processing module, the 2G/3G physical layer processing module, the 2G/3G radio frequency processing module, and the 2G/3G antenna module may run in only one mode at one time. An existing terminal generally does not support that a CS service and a PS service are concurrently implemented in the 2G network; therefore, in this solution, there is no conflict with the newly added 2G modules that independently implement the CS domain service.

When the network communication quality of the 2G network fails to meet requirements of the CS domain service, the CS domain service may also be handed over from the 2G network to the 3G network, and the 2G/3G protocol stack processing module implements the CS domain service in the 3G network.

In this solution, the 2G/3G protocol stack processing module uses a standard procedure to hand over the service to different networks, which does not directly affect the existing 2G/3G network, and therefore the experience of the PS service is better that of an existing standard terminal, and the service interruption time is shorter. If the solution is implemented by adding a set of independent 2G modules on the basis of an existing terminal, the implementation is simple.

In actual applications, persons skilled in the art may select a required solution to make designs according to actual situations (such as the design difficulty, cost, and performance requirement).

### Embodiment 4

The embodiment of the present invention is based on the above embodiments and is described by using a 2G and/or 3G network as a first network, and a 3G, WLAN, or WiMAX as a second network. Because the 2G/3G and WLAN/WiMAX belong to different systems of technologies, a typical solution is to use the WLAN/WiMAX as a plug-in module of a 2G module and a 3G module.

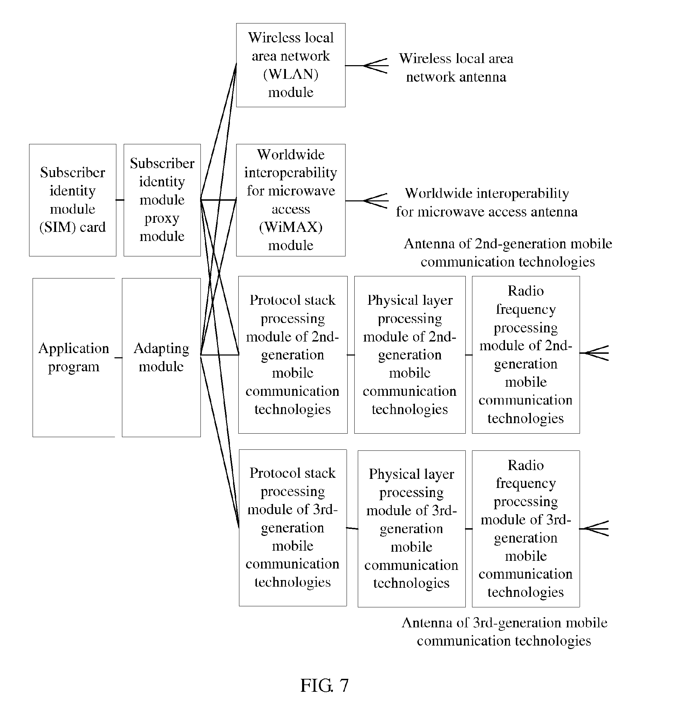

FIG. 7 is a schematic structural diagram of an embodiment of the present invention. The design of 2G and 3G parts may include only one of them (for example, only 2G or 3G is included), or includes both of them by referring to the solutions in the above embodiments. In FIG. 7, solution (2) in Embodiment 2 is applied. Certainly, other methods may also be applied and no repeated description is provided herein. WLAM or WiMAX is connected to a SIM proxy module and an adapting module as a plug-in module. Because the WLAM or WiMAX does not support a CS domain service, it processes only a PS domain service.

A first network is a network which in most cases has better communication quality but has a lower data transmission rate than a second network. Certainly, the concept is relative. For example, a 3G network may be deemed as the second network relative to a 2G network, and may be deemed as the first network relative to the WLAN or WiMAX.

When the first network is 2G, the second network may be one or more of a 3G, WLAN, or WiMAX; a CS domain is preferentially camped on the 2G network, and a PS domain may be preferentially camped on one of the 3G, WLAN, or WiMAX.

When communication quality of the 2G network fails to meet requirements of a CS domain service, if the second network includes a 3G network, the CS domain may be handed over to the 3G network; if the second network does not include a 3G network, the CS domain may not be handed over to the WLAN or WiMAX because the WLAN or WiMAX does not support the CS domain; if the WLAN or WiMAX supports a VoIP service, a CS service may be handed over to the WLAN or WiMAX where the CS service is carried in a VoIP mode.

When a network where a PS domain is camped fails to meet service requirements, a PS domain service is handed over to the 2G network and the 2G network implements PS domain functions simultaneously.

Alternatively, when the first network is a 3G network, the second network may be one or more of a WLAN or WiMAX; the CS domain is preferentially camped on the 3G network (because the WLAN and WiMAX do not support CS domain services, generally the CS domain services may be implemented only by the 3G network), and the PS domain may be preferentially camped on the WLAN or WiMAX; when network communication quality of the WLAN or WiMAX fails to meet service requirements, the PS domain service is handed over to the 3G network, and the 3G network implements the PS domain service.

If the above second networks include multiple networks (for example, there are two second networks, that is, the 3G and WLAN relative to the first network, that is, the 2G network), a network in which a PS domain is preferentially camped may be selected according to a specific policy, where the policy is user-defined. For example, the network in which the PS domain is preferentially camped may be selected according to time, historical statistics, and a current network state.

Alternatively, when the first network is a 2G network and a 3G network, the second network may be one or more of a WLAN or WiMAX; the CS domain is preferentially camped on the 2G or 3G network, the PS domain is preferentially camped on the WLAN or WiMAX network, and when the communication quality fails to meet service requirements, the PS domain is handed over to the 2G or 3G network.

In the embodiment of the present invention, one or more of the WLAN or WiMAX may be added on the basis of 2G or 3G, and a first network and a second network may be obtained in various combination manners (for example, the 2G is deemed as a first network, and one or more of the 3G, WLAN, and WiMAX is deemed as a second network), so that the CS domain is preferentially camped on the first network, and the PS domain is preferentially camped on the second network. In this way, quality of the CS domain service (voice service) is improved, and the second network with a higher rate can be used at the same time.

### Embodiment 5

Based on the above embodiments, the embodiment of the present invention is described by using a 2G or 3G network as a first network, an LTE as a second network, and a USIM card as a SIM card. Because the LTE is a 2G/3G evolution technology, it is closely integrated with 2G or 3G, and multiple solutions are involved. For example, the following manners may be applied.

1. 2G module + LTE module

In this case, a first network is a 2G network, and a second network is an LTE network; a CS domain is preferentially camped on a 2G network (a 2G module processes a CS domain service); a PS is preferentially camped on an LTE network, and the PS domain is camped on the 2G network when communication quality declines (an LTE module processes a PS domain service).

2. 2G module + 3G/LTE module

In this case, a first network is a 2G network and a 3G network, and a second network is an LTE network; a CS domain is preferentially camped on the 2G network (a 2G module processes a CS domain service); a PS is preferentially camped on the LTE network, and the PS domain is camped on the 2G network when communication quality declines (a 3G/LTE module processes a PS domain service).

3. 2G module + 2G/3G/LTE module

In this case, a first network is a 2G network and a 3G network, and a second network is an LTE network; a CS domain is preferentially camped on the 2G network (a 2G module processes a CS domain service); a PS is preferentially camped on the LTE network, and the PS domain is camped on the 2G network when communication quality declines (a 2G/3G/LTE module processes a PS domain service).

4. 3G module + LTE module

In this case, a first network is a 3G network, and a second network is an LTE network; a CS domain is preferentially camped on the 3G network (a 3G module processes a CS domain service); a PS is preferentially camped on the LTE network, and the PS domain is camped on the 3G network when communication quality declines (an LTE module processes a PS domain service).

5. 3G module + 3G/LTE module

In this case, a first network is a 3G network, and a second network is an LTE network; a CS domain is preferentially camped on the 3G network (a 3G module processes a CS domain service); a PS is preferentially camped on the LTE network, and the PS domain is camped on the 3G network when communication quality declines (an LTE module processes a PS domain service).

6. 2G module + 3G module + LTE module

In this case, a first network is a 2G network and a 3G network, and a second network is an LTE network; a CS domain is preferentially camped on the 2G network (a 2G module processes a CS domain service); a PS is preferentially camped on the LTE network, and the PS domain is camped on the 3G network when communication quality declines (a 3G module processes a PS domain service).

Every module includes submodules such as a protocol stack processing module, a physical layer processing module, a radio frequency processing module, and an antenna. For specific connection relationships and implementation manners, reference can be made to relevant description of the above embodiments (such as 2G and 3G embodiments) and no repeated description is provided herein. The meaning of "/" is the same as the expression method in the above embodiments, and indicates that several network services may be processed at the same time.

The following describes several typical integration solutions.

(1) Adding an LTE protocol stack part to a 2G/3G protocol stack processing unit to form a 2G/3G/LTE protocol stack processing unit

In this solution, a function of LTE protocol stack processing is added to an existing 2G/3G protocol stack processing module to form a 2G/3G/LTE protocol stack processing module; correspondingly, an existing 2G/3G physical layer processing module, 2G/3G radio frequency processing module, and 2G/3G antenna are enabled to support LTE, so as to form a 2G/3G/LTE physical layer processing module, a 2G/3G/LTE radio frequency processing module, and a 2G/3G/LTE antenna. Meanwhile, the solution further includes a set of 2G or 3G functional modules.

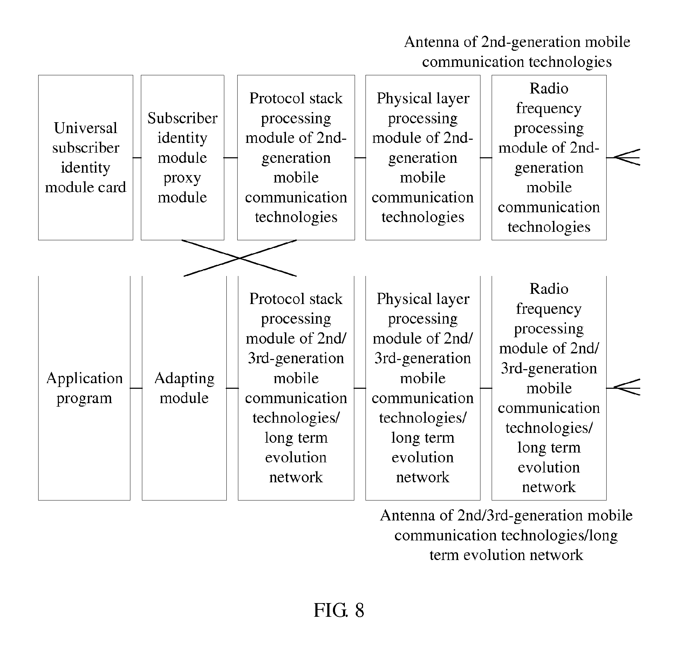

As shown in FIG. 8, 2G functional modules (or 3G functional modules which can be implemented in a similar way) + 2G/3G/LTE functional modules are used as an example. The 2G functional modules include a 2G protocol stack processing module, a 2G physical layer processing module, a 2G radio frequency processing module, and a 2G antenna; the 2G/3G/LTE functional modules include a 2G/3G/LTE physical layer processing module, a 2G/3G/LTE radio frequency processing module, and a 2G/3G/LTE antenna.

A CS domain service is preferentially camped on the 2G network, and when network communication quality of the 2G network fails to meet service requirements, the service may be handed over to the 3G or LTE network, and a 2G/3G/LTE functional module implements corresponding processing.

A PS domain service is preferentially camped on the LTE network, and when network communication quality of the LTE network fails to meet service requirements, the service may be handed over to the 3G or 2G network, and a 2G/3G/LTE functional module implements corresponding processing.

For the design of the access conflict part, reference may be made to the design with the coexistence of the 2G and 3G networks in Embodiment 2 and no repeated description is provided herein.

In specific application solutions, the 2G/3G/LTE functional modules do not necessarily support three protocol stacks at the same time, and may exist as 2G/LTE and 3G/LTE functional modules, or may exist as independent LTE functional modules.

In this solution, a WLAN or WiMAX module may also be added.

(2) Implementing the LTE part as independent functional modules

In this solution, the LTE part exists as independent functional modules. In this solution, a first network may be a 2G network, and a second network may be an LTE or an LTE + 3G network, or a second network may include the above WLAN or WiMAX (for example, various combinations such as LTE + 3G, or LTE + WLAN/WiMAX, or LTE + 3G + WLAN/WiMAX); the first network may also be a 3G network, and the second network may be an LTE or a combination of the LTE and the WLAN or WiMAX.

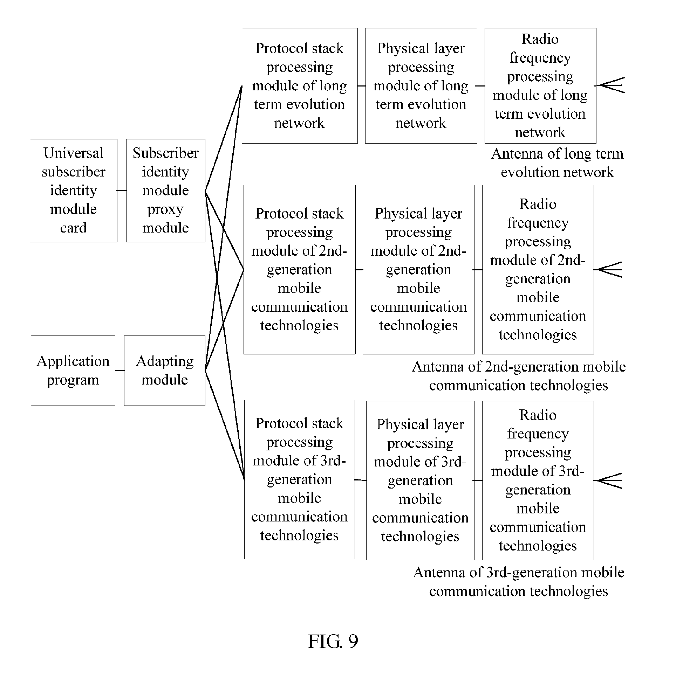

As shown in FIG. 9, the 2G network is used as the first network and the 3G network + LTE are used as the second network for illustration. In this solution, functional modules of the three networks are independent, as described hereunder:
the functional modules of the 2G network include a 2G protocol stack processing module, a 2G physical layer processing module, a 2G radio frequency processing module, and a 2G antenna;
the functional modules of the 3G network include a 3G protocol stack processing module, a 3G physical layer processing module, a 3G radio frequency processing module, and a 3G antenna; and
the functional modules of the LTE network include an LTE protocol stack processing module, an LTE physical layer processing module, an LTE radio frequency processing module, and an LTE antenna.

A PS domain is preferentially camped on the LTE network. When network communication quality fails to meet service requirements, the PS domain is camped on another network, for example, on the 3G network first. If communication quality of the 3G network still fails to meet service requirements, the PS domain is camped on the 2G network.

In the embodiment of the present invention, functions of a SIM proxy module and an adapting module are similar to those in Embodiment 2 and no repeated description is provided herein.

It should be noted that the above implementation manners are only specific embodiments. In fact, persons skilled in the art may also combine the 2G and 3G combination manners in Embodiment 3 with this embodiment to obtain more implementation solutions. In addition, if 3G modules and LTE modules do not need to work concurrently in the embodiment of the present invention, an LTE antenna and a 3G antenna may be combined into one antenna.

By using embodiments of the present invention, a CS domain is preferentially camped on a network (such as a 3G or 2G network) having lower data transmission data but in most cases having better network communication quality than an LTE, which avoids the bad experience of a voice service due to network selection for a CS domain service. Meanwhile, a PS domain is preferentially camped on the LTE network having a higher data transmission rate, so that a network with a higher speed may be used to improve the data service experience under proper conditions.

In addition, in embodiments of the present invention, a WLAN module and a WiMAX module (referring to Embodiment 3) may be integrated. For example, the WLAN or WiMAX module may implement functions of a PS domain service as an independent plug-in. That is, one of WLAN, WiMAX, and LTE networks may be used as a second network to implement the PS domain service.

Persons of ordinary skill in the art should understand that all or a part of the steps of the method according to the embodiments may be implemented by a computer program instructing relevant hardware. The program may be stored in a computer readable storage medium. When the program runs, the steps of the method according to the embodiments are performed. The storage medium may be a magnetic disk, a CD-ROM, a read-only memory (Read-Only Memory, ROM), or a random access memory (Random Access Memory, RAM).

The above exemplary embodiments describe the objectives, technical solutions, and advantages of the present invention in detail. It should be understood that the above are merely exemplary embodiments of the present invention. However, the present invention is not limited thereto. All modifications, equivalent replacements, and improvements made without departing from the idea and principle of the present invention shall fall within the protection scope of the present invention.

## Claims

1. A network selection method, wherein the method is applied to a terminal device based on a subscriber identity module SIM card, comprising:
preferentially camping a circuit switched CS domain on a first network and preferentially bearing a CS domain service by the first network;
preferentially camping a packet switched PS domain on a second network and preferentially bearing a PS domain service by the second network, wherein the first network has a lower data transmission rate than the second network but in most cases has better communication quality; and
when communication quality of the second network fails to meet requirements of the PS domain service, camping the PS domain on the first network and bearing the PS domain service by the first network.

2. The method according to claim 1, further comprising:
when the communication quality of the second network recovers to meet the requirements of the PS domain service, camping the PS domain on the second network and bearing the PS domain service by the second network.

3. The method according to claim 1, further comprising:
when communication quality of the first network fails to meet requirements of the CS domain service and when the second network is capable of bearing the CS domain service, camping the CS domain on the second network and bearing the CS domain service by the second network.

4. The method according to claim 1, further comprising:
sequentially accessing, by services which need to access the SIM card, the SIM card in order of requests;
or when the SIM card fails to store specific parameter information, storing the specific parameter information by using a third-party storage.

5. The method according to claim 1, further comprising:
receiving a service request from an application program, which is forwarded to a processing module of the first network or a processing module of the second network according to a service type; and receiving a service request reported by the processing module of the first network or the processing module of the second network, which is forwarded to the application program.

6. The method according to claim 1, further comprising:
accessing a resource, which needs to be accessed simultaneously by the PS domain service and the CS domain service, in a round robin or notification manner.

7. A terminal device, comprising: a subscriber identity module SIM card, wherein the SIM card is configured to store information about a user related to a first network and a second network, and the first network has a lower data transmission rate than the second network but in most cases has better communication quality;
a first network processing module configured to preferentially camp a CS domain on the first network and bear a CS domain service by the first network;
a second network processing module configured to preferentially camp a PS domain on the second network and bear a PS domain service by the second network; and
an adapting module configured to camp the PS domain on the first network and bear the PS domain service by the first network, when communication quality of the second network fails to meet requirements of the PS domain service.

8. The terminal device according to claim 7, wherein:
the adapting module is further configured to camp the CS domain on the second network and bear the CS domain service by the second network, when communication quality of the first network fails to meet requirements of the CS domain service and the second network is capable of bearing the CS domain service.

9. The terminal device according to claim 7, further comprising:
a SIM proxy module configured to enable services accessing the SIM card to sequentially access the SIM card in order of requests; or
when the SIM card fails to store specific parameter information, store the specific parameter information by using a third-party storage.

10. The terminal device according to claim 7, wherein the adapting module is further configured to:
receive a service request from an application program, which is forwarded to a processing module of the first network or a processing module of the second network according to a service type; and receive a service request reported by the processing module of the first network or the processing module of the second network, which is forwarded to the application program.

11. The terminal device according to claim 7, wherein the adapting module is further configured to:
access a resource, which needs to be accessed simultaneously by the PS domain service and the CS domain service, in a round robin or notification manner.

12. The terminal device according to any one of claim 7 to claim 11, wherein:
the first network is a 2G network, and the second network is a 3G network;
the first network processing module comprises a 2G protocol stack processing module, a 2G physical layer processing module, a 2G radio frequency processing module, and a 2G antenna, wherein the 2G protocol stack processing module is configured to process 2G protocols, preferentially camp the CS domain on the 2G network, and preferentially bear the CS domain service by the 2G network;
the second network processing module comprises a 2G/3G protocol stack processing module, a 3G physical layer processing module, a 3G radio frequency processing module, and a 3G antenna, wherein the 2G/3G protocol stack processing module is configured to process 2G protocols and 3G protocols, preferentially camp the PS domain on the 3G network, and preferentially bear the PS domain service by the 3G network; and
when communication quality of the 3G network fails to meet requirements of the PS domain service, the adapting module camps the PS domain on the 2G network by using a standard defined procedure, wherein the 2G physical layer processing module, the 2G radio frequency processing module, and the 2G antenna together process the service of the PS domain which is camped on the 2G network.

13. The terminal device according to any one of claim 7 to claim 11, wherein:
the first network is a 2G network, and the second network is a 3G network;
the first network processing module comprises a 2G protocol stack processing module, a 2G physical layer processing module, a 2G radio frequency processing module, and a 2G antenna, wherein the 2G protocol stack processing module is configured to process 2G protocols, preferentially camp the CS domain on the 2G network, and preferentially bear the CS domain service by the 2G network;
the second network processing module comprises a 3G protocol stack processing module, a 3G physical layer processing module, a 3G radio frequency processing module, and a 3G antenna, wherein the 3G protocol stack processing module is configured to process 3G protocols, preferentially camp the PS domain on the 3G network, and preferentially bear the PS domain service by the 3G network; and
when communication quality of the 3G network fails to meet requirements of the PS domain service, the adapting module camps the PS domain on the 2G network, wherein the 2G protocol stack processing module, the 2G physical layer processing module, the 2G radio frequency processing module, and the 2G antenna together process the service of the PS domain which is camped on the 2G network.

14. The terminal device according to any one of claim 7 to claim 11, wherein:
the first network is a 2G network, and the second network is a 3G network;
the first network processing module comprises a 2G protocol stack processing module, a 2G physical layer processing module, a 2G radio frequency processing module, and a 2G antenna, wherein the 2G protocol stack processing module is configured to process 2G protocols, preferentially camp the CS domain on the 2G network, and preferentially bear the CS domain service by the 2G network;
the second network processing module comprises a 2G/3G protocol stack processing module, a 2G/3G physical layer processing module, a 2G/3G radio frequency processing module, and a 2G/3G antenna, wherein the second network processing module is capable of processing both 2G network services and 3G network services; and the 2G/3G protocol stack processing module is configured to preferentially camp the PS domain on the 3G network, and preferentially bear the PS domain service by the 3G network; and
when communication quality of the 3G network fails to meet requirements of the PS domain service, the adapting module camps the PS domain on the 2G network, wherein the 2G/3G protocol stack processing module, the 2G/3G physical layer processing module, the 2G/3G radio frequency processing module, and the 2G/3G antenna together process the service of the PS domain which is camped on the 2G network.

15. The terminal device according to any one of claim 7 to claim 11, wherein:
the first network is a 2G network and/or a 3G network, and the second network is a wireless local area network WLAN and/or a worldwide interoperability for microwave access WiMAX network;
the first network processing module comprises a 2G protocol stack processing module, a 2G physical layer processing module, a 2G radio frequency processing module, and a 2G antenna, wherein the 2G protocol stack processing module is configured to process 2G protocols and preferentially camp the CS domain service on the 2G network; and/or a 3G protocol stack processing module, a 3G physical layer processing module, a 3G radio frequency processing module, and a 3G antenna;
when the first network is a 2G network, the first network processing module preferentially camps the CS domain on the 2G network and preferentially bears the CS domain service by the 2G network;
when the first network is a 3G network, the first network processing module preferentially camps the CS domain on the 3G network and preferentially bears the CS domain service by the 3G network;
when the first network is a 2G network and a 3G network, the first network processing module preferentially camps the CS domain on one of the 2G network and the 3G network, and preferentially bears the CS domain service by the 2G or 3G network;
the second network processing module comprises a WLAN module and a WLAN antenna; and/or a WiMAX module and a WiMAX antenna;
when the second network is a WLAN, the WLAN module preferentially camps the PS domain on the WLAN, and preferentially bears the CS domain service on the WLAN;
when the second network is a WiMAX network, the WiMAX module preferentially camps the PS domain on the WiMAX network, and preferentially bears the CS domain service by the WiMAX network;
when the second network is a WLAN and a WiMAX, the second network processing module preferentially camps the PS domain on one of the WLAN or the WiMAX network, and bears the CS domain service by the WLAN or the WiMAX network;
when communication quality of the second network fails to meet requirements of the PS domain service, the adapting module camps the PS domain on the 2G network or the 3G network, and the 2G protocol stack processing module, the 2G physical layer processing module, the 2G radio frequency processing module, and the 2G antenna process the PS domain service in the 2G network; or the 3G protocol stack processing module, the 3G physical layer processing module, the 3G radio frequency processing module, and the 3G antenna process the PS domain service in the 3G network.

16. The terminal device according to any one of claim 7 to claim 11, wherein:
the first network is a 2G network and a 3G network, and the second network is a long term evolution LTE network;
the first network processing module comprises a 2G protocol stack processing module, a 2G physical layer processing module, a 2G radio frequency processing module, and a 2G antenna, and when the first network is a 2G network, the first network processing module preferentially camps the CS domain on the first network and preferentially bears the CS domain service by the 2G network;
the second network processing module comprises a 3G/LTE protocol stack processing module, a 3G/LTE physical layer processing module, a 3G/LTE radio frequency processing module, and a 3G/LTE antenna, wherein the second network processing module is capable of processing both 3G network services and LTE services; the second processing module preferentially camps the PS domain on the LTE network and bears the PS domain service by the LTE network; when communication quality of the LTE network fails to meet requirements of the PS domain service, the adapting module camps the PS domain on the 3G network, and the 3G/LTE protocol stack processing module, the 3G/LTE physical layer processing module, the 3G/LTE radio frequency processing module, and the 3G/LTE antenna process the PS domain service in the 3G network; or
the second network processing module comprises a 2G/3G/LTE protocol stack processing module, a 2G/3G/LTE physical layer processing module, a 2G/3G/LTE radio frequency processing module, and a 2G/3G/LTE antenna, wherein the second network processing module is capable of processing 2G network services, 3G network services, and LTE services; the second processing module preferentially camps the PS domain on the LTE network and bears the PS domain service by the LTE network; when communication quality of the LTE network fails to meet requirements of the PS domain service, the adapting module camps the PS domain on the 3G network, and the 2G/3G/LTE protocol stack processing module, the 2G/3G/LTE physical layer processing module, the 2G/3G/LTE radio frequency processing module, and the 2G/3G/LTE antenna process the PS domain service in the 3G network.

17. The terminal device according to any one of claim 7 to claim 11, wherein:
the first network is a 2G network or a 3G network, and the second network comprises a long term evolution LTE network;
the first network processing module comprises a 2G protocol stack processing module, a 2G physical layer processing module, a 2G radio frequency processing module, and a 2G antenna, and when the first network is the 2G network, the first network processing module preferentially camps the CS domain on the first network, and preferentially bears the CS domain service by the 2G network; or the first network processing module comprises a 3G protocol stack processing module, a 3G physical layer processing module, a 3G radio frequency processing module, and a 3G antenna, and when the first network is the 3G network, the first network processing module preferentially camps the PS domain on the 3G network and preferentially bears the PS domain service by the 3G network;
the second network processing module comprises an LTE protocol stack processing module, an LTE physical layer processing module, an LTE radio frequency processing module, and an LTE antenna, wherein the second processing module preferentially camps the PS domain on the LTE network and bears the PS domain service by the LTE network;
when communication quality of the second network fails to meet requirements of the PS domain service, the adapting module camps the PS domain on the 2G network or the 3G network, and the 2G protocol stack processing module, the 2G physical layer processing module, the 2G radio frequency processing module, and the 2G antenna process the PS domain service in the 2G network; or the 3G protocol stack processing module, the 3G physical layer processing module, the 3G radio frequency processing module, and the 3G antenna process the PS domain service in the 3G network.

18. The terminal device according to claim 17, wherein:
the second network further comprises a WLAN or a WiMAX network;
the second network processing module further comprises a WLAN module and a WLAN antenna, and a WiMAX module and a WiMAX antenna;
the second network processing module preferentially camps the PS domain on one of the LTE, WLAN, and WiMAX network and bears the PS domain service by the network where the PS domain is camped.
